# FASCICULE DE BREVET EUROPEEN

(11) **EP 3 078 402 B1**
(45) Date de publication et mention de la délivrance du brevet: **04.10.2017**
(21) Numéro de dépôt: 16164302.8
(22) Date de dépôt: 07.04.2016
(51) Int. Cl.: A63H 27/00

(54) **SYSTÈME DE PILOTAGE DE DRONE EN IMMERSION**
SYSTEM ZUM STEUERN EINER DROHNE IM TAUCHGANG
SYSTEM FOR PILOTING AN FPV DRONE

(30) Priorité: 10.04.2015 FR 1553091
(43) Date de publication de la demande: 12.10.2016
(73) Titulaire: Parrot Drones, 75010 Paris (FR)
(72) Inventeur: SEYDOUX, Henri, 75017 Paris (FR); BRULEZ, Nicolas, 77400 Pomponne (FR); FERRAND, Arsène, 75019 Paris (FR)
(74) Mandataire: Dupuis-Latour, Dominique

(56) Documents cités:
- EP-A1- 2 364 757
- WO-A2-2010/061099
- CN-A- 102 043 410
- JP-A- 2003 267 295
- US-B1- 8 903 568

## Description

L'invention concerne les drones à voilure tournante tels que les quadricoptères et analogues.

Ces drones sont pourvus de rotors multiples entrainés par des moteurs respectifs commandables de manière différenciée afin de piloter le drone en attitude et en vitesse.

*L'AR.Drone 2.0* ou le *Bebop Drone* de Parrot SA, Paris, France sont des exemples typiques de tels quadricoptères. Ils sont équipés d'une série de capteurs (accéléromètres, gyromètres trois axes, altimètre), d'une caméra frontale captant une image de la scène vers laquelle est dirigé le drone, et d'une caméra de visée verticale captant une image du terrain survolé.

Les WO 2010/061099 A2 et EP 2 364 757 A1 (Parrot SA) décrivent un tel drone ainsi que son principe de pilotage par l'intermédiaire d'un téléphone ou baladeur multimedia à écran tactile et accéléromètre intégré, par exemple un téléphone cellulaire de type *iPhone* ou une tablette multimedia de type *iPad* (marques déposées de Apple Inc., USA). Ces appareils incorporent les divers organes de contrôle nécessaires à la détection des commandes de pilotage et à l'échange bidirectionnel de données avec le drone via une liaison sans fil de type réseau local *Wi-Fi* (IEEE 802.11) ou *Bluetooth* (marques déposées). Ils sont en outre pourvus d'un écran tactile affichant l'image captée par la caméra frontale du drone, avec en superposition un certain nombre de symboles permettant l'activation de commandes par simple contact du doigt de l'utilisateur sur cet écran tactile.

La caméra video frontale du drone est utilisable pour un pilotage en "mode immersif" ou FPV (*First-Person View*), c'est-à-dire où l'utilisateur se sert de l'image de la caméra de la même façon que s'il se trouvait lui-même à bord du drone. Elle peut également servir à capter des séquences d'images d'une scène vers laquelle se dirige le drone. L'utilisateur peut ainsi se servir du drone de la même façon que d'une caméra ou d'un caméscope qui, au lieu d'être tenu à la main, serait porté par le drone. Les images recueillies peuvent être enregistrées, diffusées, mises en ligne sur des sites web d'hébergement de séquences video, envoyées à d'autres internautes, partagées sur des réseaux sociaux, etc.

Dans le système *Bebop Drone* commercialisé par la demanderesse, l'utilisateur visualise directement l'image prise par le drone sur la station au sol commercialisée sous le nom *Skycontroller,* et il peut contrôler l'angle de vue de la caméra à l'aide de l'interface tactile de la tablette de type *iPad* équipant la station au sol. Cette commande d'angle de vue agit sur un traitement numérique de recadrage et de correction de distorsion appliquée sur l'image prise par la caméra, de type *fisheye,* de manière à simuler un mouvement physique de l'axe de la caméra vers la gauche, la droite, le haut et le bas.

Par ailleurs, la station au sol dispose d'une sortie video pour la connexion de lunettes FPV pour un pilotage en mode immersif.

Ce mode immersif atteint toutefois ses limites dans la mesure où l'image affichée est seulement tributaire de commandes tactiles de l'utilisateur, sans tenir compte de la posture de celui-ci et en particulier de sa tête.

La présente invention vise, dans un système comportant un drone, une station au sol de pilotage et des lunettes de type FPV, à permettre de guider naturellement le drone tout en autorisant l'utilisateur, d'une manière particulièrement simple, intuitive et non perturbante, à modifier le cadrage de l'image restituée dans l'image video.

Le US 8 903 568 B1 propose de piloter un drone, ou une nacelle orientable portant une caméra, en fonction des mouvements de la tête de l'utilisateur, mouvements qui sont détectés par des capteurs montés sur des lunettes ou un casque porté par l'utilisateur. En tournant la tête, ou en baissant ou levant la tête, l'utilisateur peut ainsi commander un changement d'attitude du drone ou d'orientation de la caméra.

Toutefois, ce système n'est pas à l'abri des changements inopinés d'attitude du drone ou d'orientation de la caméra lorsque l'utilisateur tourne la console avec l'ensemble de son corps, tête comprise, en direction du drone, par exemple pour suivre les déplacements de celui-ci. En effet, une telle rotation est interprétée par le système comme une rotation destinée à générer une commande, alors que telle n'est pas l'intention de l'utilisateur, de sorte que celui-ci perdra rapidement ses repères, le drone devenant impossible à piloter dans la direction souhaitée.

Tel est le problème que la présente invention s'attache à résoudre.

À cet effet, l'invention propose un système de pilotage de drone du type général divulgué par le US 8 903 568 B1 précité, c'est-à-dire comprenant un drone doté de moyens de prise de vue et une station au sol communiquant avec le drone par une liaison sans fil. La station au sol comprend une console apte à être dirigée en direction du drone pour maintenir la qualité de la liaison sans fil et des lunettes de réalité virtuelle restituant des images prises à l'aide des moyens de prise de vue et transmises à partir du drone par la liaison sans fil. Le système comprend en outre des moyens de modification du cadrage des images prises par les moyens de prise de vue en fonction d'instructions de cadrage reçues de la station au sol.

De façon caractéristique de l'invention, le système comprend en outre :
- des moyens de détermination de cap relatif pour élaborer de façon périodique une différence angulaire entre l'orientation des lunettes et l'orientation de la console, et
- des moyens pour élaborer des instructions de cadrage à destination du drone en fonction de ladite différence angulaire.

Ainsi, le système provoque un recadrage seulement lorsque la tête de l'utilisateur tourne, en lacet (latéralement) et de préférence également en tangage (en haut et en bas), par rapport à la console et donc par rapport à l'ensemble de son corps, par rapport auquel la console est tenue et/ou attachée, et ne provoque pas de recadrage lorsque l'utilisateur tourne la console avec l'ensemble de son corps, tête comprise.

Le système comprend également, facultativement, les caractéristiques avantageuses suivantes, prises individuellement ou en toutes combinaisons que l'homme du métier reconnaitra comme techniquement compatibles :
- les moyens de détermination de cap relatif comprennent une centrale inertielle associée à la station au sol et des moyens de traitement pour déterminer un cap de la console par rapport à une référence ;
- la centrale inertielle associée à la console comprend un magnétomètre, et la référence est constituée par le nord magnétique ;
- les moyens de détermination de cap relatif comprennent une centrale inertielle associée aux lunettes et des moyens de traitement pour déterminer un cap de lunettes par rapport à une référence ;
- la centrale inertielle associée aux lunettes comprend un magnétomètre et la référence est constituée par le nord magnétique ;
- les moyens de détermination de cap comprennent des moyens d'estimation de cap des lunettes par intégration de données de vitesse et/ou d'accélération générées dans les lunettes, des moyens d'initialisation pour déterminer un décalage entre le cap de console et le cap estimé des lunettes lorsqu'une correspondance physique de cap entre la console et les lunettes est déclenchée par un opérateur, et des moyens pour déterminer un cap corrigé des lunettes à partir du cap estimé et du décalage ;
- les moyens de détermination de cap relatif comprennent des moyens de soustraction entre les valeurs angulaires du cap de console et du cap de lunettes ;
- l'orientation de la console et l'orientation des lunettes comprennent au moins une orientation en lacet et/ou en tangage ;
- les moyens de modification du cadrage comprennent des moyens de traitement numérique pour recadrer et corriger une image video fixe de type fisheye prise par les moyens de prise de vue ;
- le système comprend en outre des moyens pour superposer à l'image restituée dans les lunettes de réalité virtuelle un indicateur de cap du drone.

On va maintenant décrire un exemple de réalisation d'un système de transmission d'images entre un drone et une station au sol drone selon l'invention, en référence aux dessins annexés où les mêmes références désignent d'une figure à l'autre des éléments identiques ou fonctionnellement semblables.
La Figure 1 illustre schématiquement un ensemble de drone et de station au sol du commerce, auquel s'applique avantageusement l'invention.
Les Figures 2a et 2b illustrent l'ensemble de la Figure 1 complété par des lunettes de pilotage en mode immersif selon l'invention, pour deux positions angulaires différentes de la tête de l'utilisateur.
La Figure 3 est un logigramme des fonctions essentielles réalisées par le système de l'invention.

On va maintenant décrire un exemple de réalisation du dispositif de l'invention.

Un système de prise de vue en immersion (*First-Person View*) selon la présente invention comprend un drone équipé d'au moins une caméra de prise de vue, une station au sol communiquant par une liaison sans fil de portée appropriée avec le drone et des lunettes de réalité virtuelle, dotées de moyens de restitution devant les yeux de l'utilisateur d'images lui donnant la sensation de voler à bord du drone, de la façon la plus réaliste possible (vol dit en *First Person View ou* FPV).

Dans cet exemple, le drone comprend une caméra unique avec optique de type *fisheye,* mais pourrait en variante comporter un ensemble de caméras, et des moyens de traitement numérique embarqués et/ou prévus dans la station au sol permettant de combiner les images des diverses caméras.

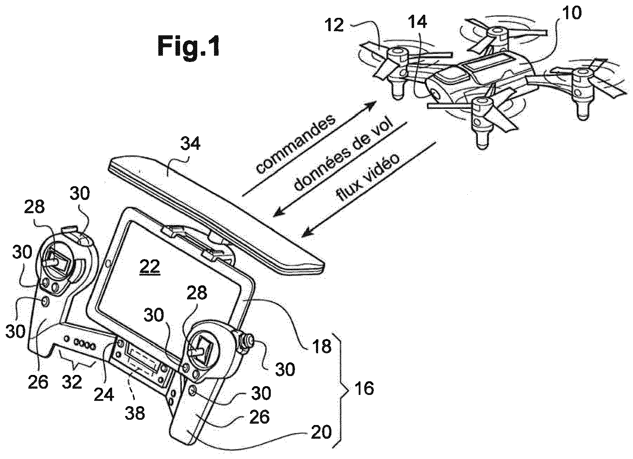

Sur la Figure 1, la référence 10 désigne de façon générale le drone, par exemple un drone volant de type quadricoptère tel que le modèle *Bebop* de Parrot SA, Paris, France. Ce drone comporte quatre rotors coplanaires 12 dont les moteurs sont pilotés indépendamment par un système intégré de navigation et de contrôle d'attitude. Le drone comporte également une caméra 14 à visée frontale permettant d'obtenir une image video de la scène vers laquelle se dirige le drone, par exemple une caméra haute définition à capteur CMOS de résolution 1920 x 1080 pixels avec une fréquence de rafraichissement du flux video de 30 fps (images par seconde), associée à un objectif grand-angle de type *fisheye.*

Le drone possède également des moyens de traitement et de correction d'image aptes à recadrer en temps réel ou quasi-réel les images prises par le drone en fonction d'une direction dans laquelle l'utilisateur souhaite porter son regard, comme on va le voir dans la suite.

Le drone est piloté par une station au sol 16 comprenant une console de télécommande 20 associée à une tablette 18.

La tablette 18 est une tablette conventionnelle, par exemple de type *iPad* (marque déposée) ou analogue comprenant un écran de visualisation 22, et dans laquelle a été chargé un module logiciel applicatif de pilotage du drone 10 et de visualisation des images prises par la caméra embarquée 14. La tablette 18 est par ailleurs équipée d'une interface radio d'échange de données, par exemple de type *Wi-Fi.* Il s'agit d'une tablette d'un modèle standard, non modifié si ce n'est le chargement du module logiciel applicatif.

L'écran 22 de la tablette 18 affiche l'image de la scène captée par la caméra embarquée du drone 14, avec en superposition un certain nombre de symboles permettant le contrôle de divers paramètres de navigation. Cet écran est un écran tactile permettant l'activation de commandes de pilotage par simple contact d'un doigt d'un opérateur sur les symboles affichés à l'écran (montée/descente, contrôle d'attitude, etc.). Ces actions sont interprétées par le logiciel applicatif qui les transforme en signaux de commande à destination du drone, envoyés sur l'interface *Wi-Fi* d'échange de données. Inversement, les données de vol en provenance du drone 10 reçues par l'interface *Wi-Fi* sont délivrées au logiciel applicatif pour y être traitées et faire éventuellement l'objet d'un affichage sur l'écran 22 de la tablette.

La production de commandes à partir de l'écran tactile de la tablette n'est ici qu'optionnelle, les différentes commandes étant dupliquées et complétées par des actions sur divers boutons et manettes de la console 20.

Plus précisément, la console 20 comporte un support 24 permettant de solidariser la tablette 18 à la console, face à l'opérateur de manière à ce que celui-ci puisse voir la totalité de la surface de l'écran 22. Le corps de la console 20 est prolongé de chaque côté par des poignées 26 pourvues de divers organes de commande tels que des manettes 28 de type "manche à balai" et des boutons 30 disposés à portée des doigts de l'opérateur et associés chacun à une commande particulière (décollage/atterrissage, retour au point de départ, déclenchement de l'enregistrement de la scène captée par la caméra, etc.). La console 20 est également munie de divers afficheurs lumineux 32 (niveau de la batterie du drone, enregistrement en cours, etc.), ainsi que d'une connectique (non représentée) permettant le branchement d'accessoires parmi lesquels des lunettes de réalité virtuelle à écran intégré utilisables en alternative à l'écran de visualisation 22 de la tablette. En variante, les accessoires peuvent communiquer avec la console par une communication sans fil.

La console 20 est également munie d'une antenne *Wi-Fi* directive 34 directionnelle à longue portée, que l'opérateur dirige vers le drone 10 lorsqu'il a entre ses mains la console de télécommande 20. Cette liaison *Wi-Fi* véhicule notamment vers le drone les commandes de pilotage à destination du drone 10, les données de composantes angulaires de la direction dans laquelle l'utilisateur en immersion souhaite regarder la scène prise par la caméra 14 (comme on va le décrire dans la suite), et depuis le drone le signal video issu de la caméra, recadrée ici dans le drone par les moyens de traitement susmentionnés.

Enfin la console 20 est équipée d'une centrale inertielle 38, comprenant de préférence un accéléromètre 3 axes, un magnétomètre 3 axes et un gyromètre 3 axes.

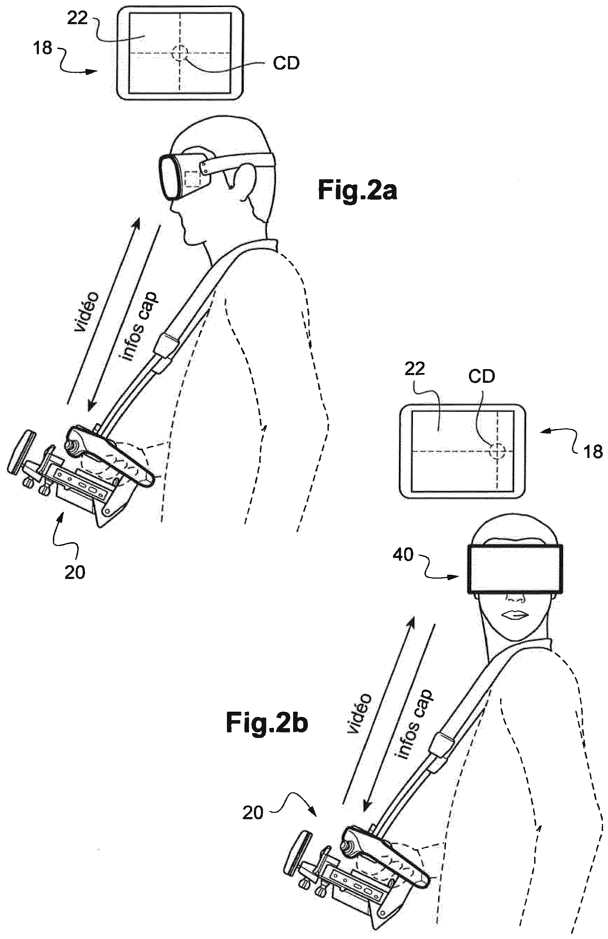

En référence aux Figures 2a et 2b, on a représenté la console 20 ainsi que des lunettes de réalité virtuelle 40 reliées à la console par une liaison filaire ou sans fil comme décrit ci-dessus, constituant un canal de communication bidirectionnelle.

Par exemple, les lunettes sont du type *Oculus Rift* (marque déposée) commercialisées par la société Oculus, Menlo Park, Californie, USA, connectées à la console 20 par une liaison filaire HDMI et/ou USB, ou encore des lunettes de type *Zeiss VR One* (marque déposée), ces dernières incorporant un téléphone portable remplaçant la tablette 18 et la liaison avec la console 20 étant alors une liaison sans fil.

La console 20 est apte à communiquer dans une direction montante avec les lunettes 40 pour qu'elles affichent une image video. Dans une forme de réalisation la plus simple, cette image est une recopie de l'image affichée sur l'écran de visualisation 22 de la tablette.

Les lunettes 40 sont dans ce premier mode de réalisation équipées d'une centrale inertielle désignée schématiquement par la référence 42, cette centrale inertielle comprenant de façon connue en soi un gyromètre 3 axes, un accéléromètre 3 axes et un magnétomètre 3 axes.

Selon l'invention, les mesures délivrées par la centrale inertielle sont transmises à la console 20 par le canal de communication descendant de manière à commander le cadrage de l'image restituée par la caméra 14 du drone 10.

Le principe général de l'invention consiste, lorsque l'utilisateur tourne la tête, à utiliser les signaux fournis par la centrale inertielle 42 pour déterminer le mouvement de la tête et en déduire un angle de rotation de celle-ci, de préférence constitué d'une composante angulaire en tangage (vers le haut, vers le bas) et d'une composante angulaire en lacet (vers la gauche, vers la droite).

La console transmet les valeurs de ces deux composantes angulaires au drone 10 de manière à ce que ce dernier effectue le traitement de recadrage et de correction de l'image grand-angle prise par sa caméra 14 pour adapter l'image restituée à la direction dans laquelle est tournée la tête de l'utilisateur.

Exprimée ainsi, cette fonctionnalité est toutefois problématique. En effet, le système drone 10 et station au sol 16 décrit plus haut impose que l'antenne 34 de la console soit convenablement orientée, au moins approximativement en direction du drone. Ceci amène l'utilisateur à tourner l'ensemble de son corps qui supporte la station au sol 16, et donc sa tête, pour suivre la position du drone lorsque celui-ci se déplace.

Or il faut éviter qu'une telle rotation soit interprétée par le système comme une rotation de la tête dans le but de regarder à gauche ou à droite, et/ou en haut ou en bas.

Si le cadrage de l'image suivait ainsi la rotation du corps de l'ensemble de l'utilisateur avec la console, l'utilisateur perdrait rapidement ses repères et le drone deviendrait impossible à piloter dans la direction souhaitée. Selon l'invention, pour modifier le cadrage de l'image prise par la caméra 14 du drone, le système va déterminer une position angulaire relative, en tangage et en lacet, entre les lunettes de réalité virtuelle 40 et la console 20, et contrôler le cadrage de l'image à partir de ces données.

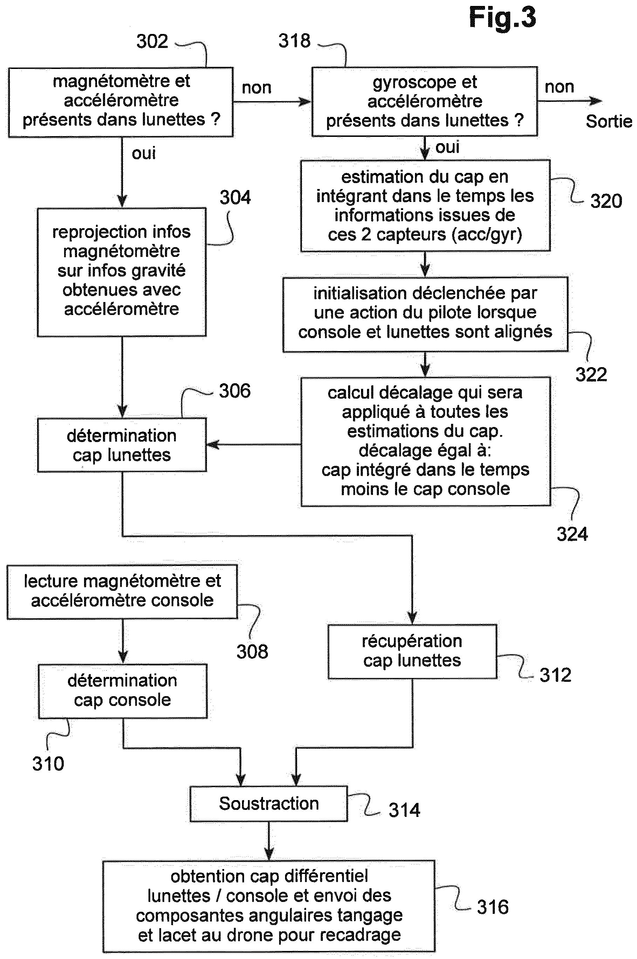

On va maintenant décrire en détail les différentes opérations mises en oeuvre à cet effet en référence à la Figure 3.

Tout d'abord à l'étape 302, le système détermine si les lunettes 40 connectées à la station au sol sont dotées de moyens autonomes de détermination de l'orientation absolue des lunettes (par rapport au nord magnétique), la savoir une centrale inertielle dotée d'un magnétomètre et d'un accéléromètre, et le cas échéant d'un gyromètre. Dans l'affirmative, à l'étape 304, les données issues du magnétomètre sont reprojetées sur les informations de gravité obtenues avec les données d'accéléromètre, ce qui permet de déterminer le cap des lunettes, à la fois en tangage et en lacet, à l'étape 306.

Ces données sont transmises à la station au sol 16 par le canal de communication descendant. Dans la station au sol, les données la centrale inertielle 38 incorporée à la console 20 sont exploitées à l'étape 308 pour engendrer une valeur de cap de la console par rapport au nord magnétique à l'étape 310.

La valeur de cap des lunettes est récupérée à partir du canal de transmission descendant à l'étape 312, est soustraite de la valeur de cap de la console à l'étape 314.

Dans le cas où cette différence est nulle, à un taux d'erreur près par exemple de quelques degrés (cas de la Figure 2a), cela signifie que l'utilisateur regarde droit devant lui, et que le cadrage de l'image *fisheye* prise par la caméra est réalisé sur l'axe optique de la caméra, c'est-à-dire de façon centrée. Ceci est illustré en partie supérieure de la Figure 2a par l'affichage, en superposition à l'image, d'un indicateur de cap du drone CD, par exemple sous forme d'un cercle, correspondant à l'axe optique de la caméra et à l'axe principal de déplacement du drone 10, et donc au centre optique de l'image. Cet indicateur est ici centré dans l'image affichée (à la fois sur l'affichage 22 de la tablette 18 et sur l'affichage des lunettes 44).

Dans le cas où l'utilisateur a tourné la tête vers la gauche sans faire tourner son corps (le cap de la console ne changeant donc pas), comme illustré sur la Figure 2b, alors l'étape 314 détermine une différence correspondante entre le cap des lunettes et le cap de la console. Cette différence se matérialise, dans le cas d'espèce où les caps sont déterminés à la fois en tangage et en lacet, par une composante angulaire de différence en tangage et une composante angulaire de différence en lacet, et ces composantes, à l'étape 316, sont envoyées au drone 10 à l'étape 316 de manière à ce que le traitement d'image dans ce dernier assure un recadrage correspondant de l'image *fisheye* prise par la caméra 14, cette image recadrée étant transmises à la station au sol 16, qui elle-même la transmet aux lunettes de réalité virtuelle 40.

Ceci est illustré en partie supérieure de la Figure 2b par le fait que l'image recadrée affichée sur le dispositif d'affichage 22 et sur les lunettes 40 se situe globalement à gauche de l'indicateur de cap du drone CD.

La mesure différentielle de cap décrite aux étapes précédentes est réalisée à intervalles réguliers, par exemple de 10 à 100 fois par seconde, pour à chaque fois ajuster le cadrage de l'image prise par la caméra 14 et restituer l'image recadrée sur la station au sol 16 et dans les lunettes 40. En revanche, lorsque l'ensemble du corps et de la tête de l'utilisateur, ainsi que la station au sol 16, tournent d'un même bloc (notamment pour ajuster l'orientation de l'antenne 34 en direction du drone 10), aucun recadrage de l'image n'est provoqué.

On va maintenant décrire une variante de réalisation de l'invention, utilisable dans le cas où les lunettes de réalité virtuelle ne sont pas équipées d'un magnétomètre.

Cette implémentation peut être mise en oeuvre par exemple en prévoyant dans le logiciel embarqué dans la tablette 18 un module de reconnaissance de type de lunettes à partir duquel le système est capable de déterminer quel type de moyens de détection de position et/ou de mouvement et/ou d'accélération équipe les lunettes connectées à la station 16 (elles-mêmes, de façon classique en soi, ayant un identifiant immuable de type d'équipement).

Ainsi dans le cas d'espèce, contrairement au processus décrit plus haut, l'étape 302 a déterminé que les lunettes connectées, cette fois-ci d'un modèle différent, étaient équipées d'un gyromètre et d'un accéléromètre, mais pas d'un magnétomètre (étape 318).

On comprend que dans ce cas, le système est incapable de déterminer un cap absolu pour les lunettes.

Dans ce cas, le système effectue régulièrement (étape 320) une estimation du cap des lunettes en effectuant une intégration temporelle des informations issues de l'accéléromètre et du gyromètre.

À l'étape 322, une initialisation est réalisée, selon laquelle il est demandé à l'utilisateur d'aligner le cap des lunettes (déterminée par la direction de la tête) avec le cap de la console 20, puis d'appuyer sur un bouton de la console 20 (ou sur une zone tactile déterminée de la tablette 18).

À cet instant, une différence entre le cap estimé des lunettes 40 et le cap de la console 20 mesuré à ce moment-là est déterminée et mémorisée pour tenir lieu de valeur d'*offset,* c'est-à-dire de décalage (étape 324).

Par la suite, la valeur du cap courant est calculée à l'étape 306 en appliquant à la valeur estimée du cap des lunettes, toujours obtenue à l'étape 320, le décalage déterminé à l'étape 324.

Par la suite, le processus se déroule comme décrit précédemment.

Bien entendu, la présente invention n'est nullement limitée aux formes de réalisation décrites et représentées, et l'homme du métier saura y apporter de nombreuses variantes et modifications. En particulier :
- elle s'applique à des drones de types variés, d'inspection, de loisirs ou autres, à vol stationnaire ou non ;
- elle s'applique à tous types de types de lunettes de réalité virtuelle, incorporant une centrale inertielle, ou au moins un accéléromètre et un gyromètre (2 axes ou 3 axes), ou sur lesquelles est fixé un module distinct possédant une centrale inertielle, ou au moins un accéléromètre et un gyromètre (2 axes ou 3 axes) ;
- le recadrage de l'image en fonction de la position de la tête par rapport à la console s'effectue au moins selon l'angle de lacet, et de préférence selon l'angle de lacet et l'angle de tangage, et le cas échéant en prenant également en compte l'angle de roulis ;
- le recadrage de l'image peut être de type logiciel à partir d'une image *fisheye* prise par la caméra video 14 (avec de façon connue en soi traitement de correction des courbures), soit de type matériel, la caméra étant alors montée par exemple sur une nacelle motorisée, l'angle de visée optique de la caméra étant ajustée en fonction des composantes angulaires en tangage et en lacet reçues de la station au sol à l'étape 316 ;
- le drone peut être équipé non pas d'une caméra unique, mais d'un ensemble de caméras, de définitions identiques ou différentes, ayant différents angles de visée optique, et dont les images sont combinées pour engendrer l'image affichée dans les lunettes 40 et le cas échéant sur le dispositif d'affichage 22 ;
- les traitements de recadrage et de correction de l'image en fonction des angles de la tête de l'utilisateur par rapport à la console peuvent être effectués dans le drone, dans la station au sol, ou de façon répartie entre les deux ; si les lunettes de réalité virtuelle possèdent des moyens de traitement numérique en ayant la capacité, une partie de ces traitements peut également être prise en charge par les lunettes ;
- les lunettes de réalité virtuelle peuvent comporter un système d'affichage dédié, ou un terminal intelligent du commerce tel qu'un smartphone ou une tablette, rapporté sur les lunettes.

## Revendications

1. Système de pilotage de drone en immersion comprenant un drone (10) doté de moyens de prise de vue (14) et une station au sol (16, 40) communiquant avec le drone par une liaison sans fil,
la station au sol comprenant des lunettes de réalité virtuelle (40) restituant des images prises à l'aide des moyens de prise de vue et transmises à partir du drone par une liaison sans fil,
le système comprenant en outre des moyens de modification du cadrage des images prises par les moyens de prise de vue (14) en fonction d'instructions de cadrage reçues de la station au sol,
le système étant **caractérisé en ce qu'**il comprend en outre :
- une console (20) apte à être dirigée en direction du drone pour maintenir la qualité de ladite liaison sans fil ;
- des moyens (302-324) de détermination de cap relatif pour élaborer de façon périodique une différence angulaire entre l'orientation des lunettes et l'orientation de la console, et
- des moyens (316) pour élaborer des instructions de cadrage à destination du drone en fonction de ladite différence angulaire.

2. Système selon la revendication 1, dans lequel les moyens de détermination de cap relatif comprennent une centrale inertielle (38) associée à la station au sol et des moyens de traitement pour déterminer un cap de la console par rapport à une référence.

3. Système selon la revendication 2, dans lequel la centrale inertielle (38) associée à la console comprend un magnétomètre, et la référence est constituée par le nord magnétique.

4. Système selon la revendication 2, dans lequel les moyens de détermination de cap relatif comprennent une centrale inertielle (42) associée aux lunettes et des moyens de traitement pour déterminer un cap de lunettes par rapport à une référence.

5. Système selon la revendication 4, dans lequel la centrale inertielle (42) associée aux lunettes comprend un magnétomètre et la référence est constituée par le nord magnétique.

6. Système selon la revendication 2, dans lequel les moyens de détermination de cap comprennent des moyens (320) d'estimation de cap des lunettes par intégration de données de vitesse et/ou d'accélération générées dans les lunettes, des moyens d'initialisation (322) pour déterminer un décalage entre le cap de console et le cap estimé des lunettes lors qu'une correspondance physique de cap entre la console et les lunettes est déclenchée par un opérateur, et des moyens (324) pour déterminer un cap corrigé des lunettes à partir du cap estimé et du décalage.

7. Système selon la revendication 2, dans lequel les moyens de détermination de cap relatif comprennent des moyens (314) de soustraction entre les valeurs angulaires du cap de console et du cap de lunettes.

8. Système selon la revendication 1, dans lequel l'orientation de la console et l'orientation des lunettes comprennent au moins une orientation en lacet et/ou en tangage.

9. Système selon la revendication 1, dans lequel les moyens de modification du cadrage comprennent des moyens de traitement numérique pour recadrer et corriger une image video fixe de type *fisheye* prise par les moyens (14) de prise de vue.

10. Système selon la revendication 1, comprenant en outre des moyens pour superposer à l'image restituée dans les lunettes de réalité virtuelle un indicateur de cap du drone (CD).

## Patentansprüche

1. System zum Eintauchensteuern einer Drohne, umfassend eine Drohne (10), die mit Bildaufnahmemitteln (14) versehen ist, und eine Bodenstation (16, 40), die mit der Drohne über eine drahtlose Verbindung kommuniziert,
wobei die Bodenstation eine Virtuelle-Realitäts-Brille (40) umfasst zur Wiedergabe von Bildern, die mit Hilfe der Bildaufnahmemittel aufgenommen und von der Drohne über eine drahtlose Verbindung gesendet werden,
wobei das System ferner Mittel umfasst zur Veränderung der Skalierung der durch die Bildaufnahmemittel (14) aufgenommenen Bilder in Abhängigkeit von Skalierungsanweisungen, die von der Bodenstation empfangen werden,
wobei das System **dadurch gekennzeichnet ist, dass** es ferner umfasst:
- eine Konsole (20), die dazu eingerichtet ist, in Richtung der Drohne gerichtet zu werden, um die Qualität der drahtlosen Verbindung aufrechtzuerhalten,
- Mittel (302-324) zur Bestimmung des relativen Kurses, um periodisch eine Winkeldifferenz zwischen der Ausrichtung der Brille und der Ausrichtung der Konsole zu erstellen, und
- Mittel (316), um Skalierungsanweisungen für die Drohne in Abhängigkeit von der Winkeldifferenz zu erstellen.

2. System nach Anspruch 1, wobei die Mittel zur Bestimmung des relativen Kurses eine inertiale Zentrale (38), die der Bodenstation zugeordnet ist, und Verarbeitungsmittel zur Bestimmung eines Kurses der Konsole relativ zu einer Referenz umfassen.

3. System nach Anspruch 2, wobei die inertiale Zentrale (38), die der Bodenstation zugeordnet ist, ein Magnetometer umfasst und die Referenz vom magnetischen Norden gebildet ist.

4. System nach Anspruch 2, wobei die Mittel zur Bestimmung des relativen Kurses eine inertiale Zentrale (42), die der Brille zugeordnet ist, und Verarbeitungsmittel zur Bestimmung eines Kurses der Brille relativ zu einer Referenz umfassen.

5. System nach Anspruch 4, wobei die inertiale Zentrale (42), die der Brille zugeordnet ist, ein Magnetometer umfasst und die Referenz vom magnetischen Norden gebildet ist.

6. System nach Anspruch 2, wobei die Mittel zur Kursbestimmung Folgendes umfassen: Mittel (320) zur Kursbestimmung der Brille durch Integration von Geschwindigkeits- und/oder Beschleunigungsdaten, die in der Brille erzeugt werden, Mittel zur Initialisierung (322), um eine Verschiebung zwischen dem Kurs der Konsole und dem geschätzten Kurs der Brille zu bestimmen, wenn eine physikalische Kursübereinstimmung zwischen der Konsole und der Brille von einem Bediener ausgelöst wird, und Mittel (324), um einen korrigierten Kurs der Brille ausgehend von dem geschätzten Kurs und der Verschiebung zu bestimmen.

7. System nach Anspruch 2, wobei die Mittel zur Bestimmung des relativen Kurses Mittel (314) zum Subtrahieren zwischen den Winkelwerten des Kurses der Konsole und des Kurses der Brille umfassen.

8. System nach Anspruch 1, wobei die Ausrichtung der Konsole und die Ausrichtung der Brille mindestens eine Gier- und/oder Nickausrichtung umfassen.

9. System nach Anspruch 1, wobei die Mittel zur Veränderung der Skalierung digitale Verarbeitungsmittel umfassen, um ein durch die Bildaufnahmemittel (14) aufgenommenes Videostandbild des Fisheye-Typs neu zu skalieren und zu korrigieren.

10. System nach Anspruch 1, ferner umfassend Mittel, um in das in der Virtuelle-Realitäts-Brille wiedergegebene Bild eine Anzeige für den Kurs der Drohne (CD) einzublenden.

## Claims

1. A drone immersion-piloting system comprising a drone (10) provided with imaging means (14) and a ground station (16, 40) communicating with the drone through a wireless link,
the ground station comprising virtual reality glasses (40) rendering images taken by means of the imaging means and transmitted from the drone through a wireless link,
the system further comprising means for modifying the framing of the images taken by the imaging means (14) as a function of framing instructions received from the ground station,
the system being **characterized in that** it further comprises:
- a console (20) adapted to be directed towards the drone to maintain the quality of said wireless link;
- relative heading determination means (302-324) for periodically elaborating an angular difference between the orientation of the glasses and the orientation of the console, and
- means (316) for elaborating framing instructions for the drone as a function of said angular difference.

2. The system according to claim 1, wherein the relative heading determination means comprise an inertial unit (38) associated with the ground station and processing means for determining a heading of the console with respect to a reference.

3. The system according to claim 2, wherein the inertial unit (38) associated with the console comprises a magnetometer, and the reference is constituted by the magnetic North.

4. The system according to claim 2, wherein the relative heading determination means comprise an inertial unit (42) associated with the glasses and processing means for determining a glasses heading with respect to a reference.

5. The system according to claim 4, wherein the inertial unit (42) associated with the glasses comprises a magnetometer, and the reference is constituted by the magnetic North.

6. The system according to claim 2, wherein the heading determination means comprise means (320) for estimating the glasses heading by integration of speed and/or acceleration data generated in the glasses, initialization means (322) for determining an offset between the console heading and the estimated heading of the glasses when a physical correspondence of heading between the console and the glasses is triggered by an operator, and means (324) for determining a corrected heading of the glasses from the estimated heading and the offset.

7. The system according to claim 2, wherein the relative heading determination means comprise means (314) of subtraction between the angular values of the console heading and of the glasses heading.

8. The system according to claim 1, wherein the orientation of the console and the orientation of the glasses comprise at least one yaw and/or pitch orientation.

9. The system according to claim 1, wherein the framing modification means comprise digital processing means for framing and correcting a still video image of the fisheye type taken by the imaging means (14).

10. The system according to claim 1, further comprising means for superimposing to the image rendered in the virtual reality glasses a drone heading indicator (CD).
